(19) Europäisches Patentamt
European Patent Office
Office européen des brevets

(11) Veröffentlichungsnummer: **0 037 542**
**B1**

(12) # EUROPÄISCHE PATENTSCHRIFT

(45) Veröffentlichungstag der Patentschrift: **29.06.83**

(51) Int. Cl.³: **B 01 D 19/04**

(21) Anmeldenummer: **81102369.6**

(22) Anmeldetag: **28.03.81**

(54) **Verfahren zur Herstellung eines Entschäumers für wässrige Systeme und seine Verwendung.**

(30) Priorität: **05.04.80 DE 3013391**

(43) Veröffentlichungstag der Anmeldung: **14.10.81 Patentblatt 81/41**

(45) Bekanntmachung des Hinweises auf die Patenterteilung: **29.06.83 Patentblatt 83/26**

(84) Benannte Vertragsstaaten: **AT BE CH DE FR GB IT LI LU NL**

(56) Entgegenhaltungen:
**DD-A-56 762**
**DE-A-1 544 001**
**DE-A-2 539 016**
**DE-A-2 641 263**
**US-A-3 207 698**
**US-A-3 344 075**
**US-A-3 408 306**
**US-A-4 145 310**

(73) Patentinhaber: **Henkel Kommanditgesellschaft auf Aktien, Postfach 1100 Henkelstrasse 67, D-4000 Düsseldorf 1 (DE)**

(72) Erfinder: **Hempel, Hans-Ulrich, Dr., Wiesengrund 5, D-5063 Overath (DE)**
Erfinder: **Schmadel, Emund, Dr., Hüschelrath 9, D-5653 Leichlingen (DE)**

EP 0 037 542 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung eines Entschäumers für wässrige Systeme und seine Verwendung

Gegenstand der vorliegenden Erfindung ist ein Verfahren zur Herstellung eines neuen silikonfreien Entschäumers für wässrige Systeme, insbesondere mit der Eignung zum Entschäumen von Wasch- und Reinigungsflotten. Gegenstand der Erfindung ist ferner die Verwendung der neuen Entschäumerzubereitung als Schauminhibitor, insbesondere in Wasch- und Reinigungsmitteln.

Das Problem der Schaumregulierung in wässrigen Systemen, die zu einer übermässigen Schaumentwicklung beim Bewegen und/oder Erwärmen neigen, hat bereits zu zahlreichen Lösungsvorschlägen und dem Entstehen eines breiten Standes der Technik geführt. Insbesondere in wässrigen Wasch- und Reinigungsflotten, wie sie bei der modernen Waschbehandlung in Waschmaschinen und hier vorwiegend in Trommelwaschmaschinen durchgeführt wird, ist die Steuerung der Schaumentwicklung über den gesamten Waschbereich unerlässlich, weil sowohl zu starkes Schäumen, aber auch das völlige Fehlen von Schaum für den Wascherfolg unerwünscht sind. Ein hervorragendes Entschäumungsmittel wurde in den Seifen auf Basis von im wesentlichen $C_{20}$- und $C_{22}$-Fettsäuren, wie sie aus Rapsölen und Fischtranen als natürlichen Quellen zur Verfügung stehen, gefunden. Aus den verschiedensten Gründen ist jedoch die zuverlässige Versorgung mit diesen Rohstoffen nicht gewährleistet. Auch ist die erforderliche relativ hohe Anwendungskonzentration, die in der Grössenordnung von 2 bis 3,5 Gew.-% bezogen auf das konfektionierte Waschmittel liegt, als ein Nachteil dieses Entschäumers anzusehen.

Die Silikon-Entschäumungsmittel, die bekanntlich aus flüssigen Polysiloxanen mit Alkyl- oder Arylsubstituenten und feinteiliger kolloidaler Kieselsäure bestehen, bewirken die angestrebte Schaumregulierung bereits mit sehr geringen, wesentlich unter 1 Gew.-% des Waschmittels liegenden Einsatzmengen und sind in dieser Hinsicht den schaumdämpfenden Seifen überlegen. Allerdings haben die hohen Kosten der Silikonentschäumer und auch die Vielzahl der anwendungstechnischen Parameter, die bei der Schaumregulierung zu beachten sind, zu weiteren Anstrengungen auf diesem Gebiet geführt, mit dem Ziel, neue, auch silikonfreie Entschäumungsmittel zur Verfügung zu stellen. Es hat deshalb nicht an Versuchen gefehlt, flüssige und feste Kohlenwasserstoffe oder Chlorkohlenwasserstoffe, wachsartige Fettsäureester, sowie langkettige, bis zu 50 C-Atome enthaltende Fettalkohole, Fettketone, aliphatische Disulfide bzw. Sulfoxide und dergleichen als schauminhibierende Wirkstoffe zum Teil auch in Kombination mit hydrophobem, feinteiligem Siliciumdioxid vorzuschlagen. Beispielsweise wurde ein spezielles ternäres Entschäumungsmittel, das aus einem flüssigen Kohlenwasserstoff, einem festen Kohlenwasserstoff oder einem Fettsäureester sowie einem hydrophoben Siliciumdioxid besteht, in neuerer Zeit aus der europäischen Offenlegungschrift 0 000 216 bekannt.

Die vorliegende Erfindung stellt nun der Entschäumungstechnologie ein neuartiges Entschäumersystem zur Verfügung, das aus leicht zugänglichen Rohstoffen in bestimmter Weise erhalten wird und bereits in geringen Anwendungskonzentrationen hochwirksam ist, ohne freie Polysiloxane zu enthalten.

Gegenstand der Erfindung ist ein Verfahren zur Herstellung eines Entschäumers für wässrige Systeme, das dadurch gekennzeichnet ist, dass man einen 18 bis 30 Kohlenstoffatome enthaltenden, kettenverzweigten, primären Alkohol mit hydrophobierter, kolloidaler Kieselsäure im Verhältnis Alkohol:Kieselsäure wie 100:2 bis 100:20, vorzugsweise 100:3 bis 100:10, vermischt und unter Rühren auf Temperaturen zwischen 100 und 240 °C erhitzt. Das Erhitzen unter Rühren erfolgt vorzugsweise unter einer Inertgasatmosphäre für die Dauer von 1 bis 5 Stunden. Ein anschliessender Abkühlungsvorgang auf Raumtemperatur beendet das Verfahren.

Für das Verfahren besonders geeignete Alkohole sind die sogenannten Guerbet-Alkohole, d.h. einfach verzweigte Isoalkohole, die durch die Guerbet-Reaktion aus Fettalkoholen technisch leicht zugänglich sind. Diese Guerbet-Alkohole lassen sich durch die folgende allgemeine Formel wiedergeben:

$$\begin{array}{c} \qquad\qquad\qquad R \\ \qquad\qquad\qquad | \\ R{-}CH_2{-}CH_2{-}CH{-}CH_2{-}OH, \end{array}$$

in der die beiden Gruppen R gleich oder verschieden sein können und Alkylreste mit 4 bis 16 Kohlenstoffatomen bedeuten. Die Guerbet-Alkohole sollen insgesamt 18 bis 30 Kohlenstoffatome aufweisen. Die erfindungsgemäss eingesetzten Guerbet-Alkohole können einheitliche Verbindungen oder Gemische sein; bevorzugt werden bei Raumtemperatur flüssige Produkte eingesetzt.

Die erfindungsgemäss hergestellten Verfahrensprodukte sind hochwirksame Schauminhibitoren; sie bewirken bereits in Mengenanteilen von 0,01 bis 1 Gew.-%, vorzugsweise 0,05 bis 0,2 Gew.-% in einem üblichen modernen für Waschmaschinen geeigneten Waschmittel, das im allgemeinen 5 bis 30 Gew.-% eines oberflächenaktiven Wirkstoffs enthält, eine über den ganzen Waschprozess reichende Schaumdämpfung. Die hochwirksame Schauminhibierung der neuen Verfahrensprodukte ist insofern überraschend, als beispielsweise aus der DE-A-1 948 800 schäumende Badezusatze bekannt sind, die neben den für Badezusätze üblichen stark schäumenden Waschaktivsubstanzen 5 bis 50% des Guerbet-Alkohols 2-Octyldodecanol (R = 8 in der obigen Formel) enthalten.

Das erfindungsgemässe Verfahren ist einfach durchzuführen und erfordert keine speziellen Vorrichtungen. Es ist von Vorteil, jedoch nicht unbedingt notwendig, das Gemisch aus dem Alkohol und der Kieselsäure vor dem Erhitzen zu homogenisieren. Hierzu genügen übliche Homogenisierungsvorrichtungen, wie z.B. ein mit einer Zahnscheibe versehener schnell laufender Rührer. Das Erhitzen der Mischungen ist unbedingt notwendig und somit ein wesentlicher Bestandteil des erfindungsgemässen Verfahrens. Ohne das Erhitzen besitzen die Mischungen keine befriedigende schauminhibierende Wirkung.

Die Herstellung der erfindungsgemäss verwendbaren einfach verzweigten Isoalkohole ist bekannt. Zur Herstellung der Guerbet-Alkohole wird beispielsweise auf das in der deutschen Offenlegungsschrift 2 634 676 beschriebene Verfahren verwiesen; eine allgemeinere Information zur Guerbet-Reaktion findet sich zum Beispiel bei F. Asinger, Chemie und Technologie der Monoolefine, 1957, Seiten 547/548, und in der dort zitierten Literatur.

Mit besonderem Vorteil werden zur Herstellung der als Ausgangsstoffe dienenden Guerbet-Alkohole die sogenannten Vorlauf-Fettalkohole verwendet, die bei der technischen Aufarbeitung der natürlichen Fette anfallen und für die direkte Weiterverarbeitung zu Tensiden in der Waschmittelindustrie ungeeignet sind. Es handelt sich dabei um die durch Hydrierung von Fettsäuren mit weniger als 12 Kohlenstoffatomen anfallenden Fettalkohole, wie z.B. die Verbindungen Hexanol, Octanol, Decanol. Die erfindungsgemässen Verfahrensprodukte haben somit den Vorteil, dass sie aus besonders preiswerten Rohstoffen, die bei der Herstellung von Waschaktivsubstanzen zwangsläufig und ständig als unerwünschte Nebenprodukte anfallen, erhalten werden können. Zwar werden auch aus den Fettalkoholen mit 12 und mehr C-Atomen, die die wichtigen Rohstoffe zur Herstellung von Waschaktivsubstanzen darstellen, über die Guerbet-Reaktion und die erfindungsgemässe Weiterverarbeitung hochwirksame Schauminhibitoren erhalten, jedoch ist deren Wirksamkeit nicht grösser als die aus den sogenannten Vorlauf-Fettalkoholen, so dass keine technische Notwendigkeit besteht, auf diese längerkettigen Fettalkohole als Rohstoffe zurückzugreifen. Bevorzugte Ausgangsstoffe der Guerbet-Alkohole sind somit die chemisch einheitlichen Verbindungen oder Gemische mit $C_6$–$C_{10}$ für R in der obigen Formel der Guerbet-Alkohole, mit Schwerpunkt der Häufigkeitsverteilung bei $C_8$, d.h. bei Decanol als Ausgangsrohstoff.

Geeignete Kieselsäuren sind alle hydrophobierten Kieselsäuren mit einer spezifischen Oberfläche von mindestens 50 $m^2/g$. Im allgemeinen liegen die Werte der spezifischen Oberfläche bei 100 bis 300 $m^2/g$. Bei diesen Kieselsäuren handelt es sich um mikrofeinteiliges Siliciumdioxid mit einer durchschnittlichen Primärteilchengrösse von zirka 5 mμ bis zirka 50 mμ bestimmt durch die Auswertung von elektronenoptischen Aufnahmen mit Teilchen der individuellen Grösse im Bereich von im wesentlichen 3 mμ bis 150 mμ. Derartige feinteilige Kieselsäuren werden durch Flammenhydrolyse oder durch Fällung gewonnen. Die Hydrophobierung der Kieselsäuren wird üblicherweise durch Behandeln mit Alkylchlorsilanen, zum Beispiel Dimethyldichlorsilan oder Trimethylchlorsilan oder cyclischen oder linearen Polydimethylsiloxanen vorgenommen.

Die zur Hydrophobierung erforderlichen Mengen an Silanen beziehungsweise Siloxanen liegen in der Grössenordnung von 4 bis 6 Gewichtsprozent bezogen auf die Kieselsäure; sie sind also äusserst gering. Bezogen auf die Menge des erfindungsgemässen Verfahrensprodukts handelt es sich um Grössenordnungen von nur 0,1 bis 0,6 Gewichtsprozent, so dass es gerechtfertigt ist, die erfindungsgemässen Verfahrensprodukte als silikonfrei zu bezeichnen.

Die erfindungsgemässen Verfahrensprodukte eignen sich hervorragend für die Verwendung als Schauminhibitoren für wässrige Systeme in beliebigen Anwendungsgebieten, wie die Papierindustrie, Erdölgewinnung, Zuckerraffination, Textilindustrie, Abwasserbehandlung, Schneidölemulsionen, für Destillations- und Flotationsverfahren sowie insbesondere für bewegte und erhitzte Wasch- und Reinigungsflotten. Die erfindungsgemässen Verfahrensprodukte sind alkalistabil und werden auch durch wässrige Alkali- und Tensidlösungen nicht inaktiviert. Sie eignen sich daher in idealer Weise für die Einarbeitung in pulverförmige und flüssige Wasch- und Reinigungsmittel nach den üblichen für die Herstellung von flüssigen und pulverförmigen Wasch- und Reinigungsmitteln bekannten Methoden. Eine besonders bevorzugte Variante ist die Einarbeitung in pulverförmige Wasch- und Reinigungsmittel über ein pulverförmiges Vorgemisch, wobei man die Verfahrensprodukte entweder mit einem separaten Pulverzusatz, wie Natriumperborat oder einem Granulat oder Sprühpulver aus den Gerüstsubstanzen des Waschmittels als festen Träger vermischt. Auch die direkte Einarbeitung in den durch Sprühtrocknung weiterzuverarbeitenden Waschmittelansatz ist prinzipiell möglich, wenn auch hierbei aufgrund des durch die Sprühtrocknung eintretenden partiellen Wirkungsverlustes höhere Einsatzmengen erforderlich sind. Anstelle der direkten Vermischung mit dem Waschmittelslurry ist aber auch die Zumischung zum fertigen Slurry kurz vor den Versprühungsstellen grundsätzlich möglich.

Ein weiterer Gegenstand der Erfindung ist daher die Verwendung der Verfahrensprodukte als Schauminhibitoren in Wasch- und Reinigungsmitteln. Von besonderem Interesse sind solche Wasch- und Reinigungsmittel, die in geschlossenen Waschmaschinen und Geschirreinigungsmaschinen mit starker mechanischer Bearbeitung des Reinigungsgutes eingesetzt werden. Wie bereits ausgeführt, genügen Zusätze des erfindungsgemässen Verfahrensproduktes im Bereich von 0,01 bis 1, vorzugsweise 0,05 bis 0,2 Gew.-% in den Wasch- und Reinigungsmitteln, um die Schaumentwicklung zu steuern. Die erfindungsgemässen Verfahrensprodukte sind somit bezüglich ihrer Einsatzkonzentration vergleichbar mit den wirksamsten Silikonpräparaten des Handels. Wasch- und Reinigungsmittel, die den erfindungsgemäss hergestellten Schauminhibitor enthalten,

können anionische, nichtionische, zwitterionische und gegebenenfalls auch kationische Tenside mit an sich starker Schaumentwicklung enthalten, ausserdem wasserlösliche und wasserunlösliche Gerüstsubstanzen, Alkalien sowie sonstige, das Wasch- und Reinigungsergebnis verbessernde bzw. die Anwendungseigenschaften des Reinigungsgutes verbessernde Zusätze.

Beispiele

Die folgenden Beispiele sollen die Erfindung näher erläutern:

Beispiel 1

100 g 2-Octyldodecanol ($R = C_8H_{17}$ in der oben angegebenen allgemeinen Formel), im Handel z.B. unter der Bezeichnung Eutanol G (Brechungsindex von Eutanol G (20 °C): 1,454–1,456) erhältlich, und 3,5 g einer mit Dimethyldichlorsilan hydrophobierten pyrogenen Kieselsäure mit einer BET-Oberfläche von 120 $m^2/g$ und einem mittleren Primärteilchendurchmesser von 16 mμ (Aerosil R 972 der Firma Degussa) wurden mit einem Pendraulik-Rührer (Firma Pendraulik, Bad Münder, Bundesrepublik Deutschland), der mit einer Zahnscheibe von 40 mm Durchmesser versehen war, bei 900 bis 1000 U/min. homogenisiert. Danach wurde der Ansatz zur Stabilisierung unter Rühren in einer Stickstoffatmosphäre 5 Stunden auf 240 °C erhitzt. Das erhaltene Produkt hatte eine Viskosität von 126 mPa·s bei 20 °C.

Beispiele 2 und 3

Beispiel 2 wurde nach der Vorschrift von Beispiel 1 hergestellt, jedoch wurde nur auf 100 °C erhitzt; bei Beispiel 3 wurde ebenfalls nach der Vorschrift von Beispiel 1 verfahren, es wurde jedoch nur homogenisiert und anschliessend nicht erhitzt.

Viskosität der so erhaltenen Produkte bei 20 °C:
Beispiel 2: 153 mPa·s;
Beispiel 3: 142 mPa·s.

Beispiel 4

Der Ansatz entsprach dem des Beispiels 1; es wurde jedoch nicht homogenisiert, sondern lediglich 5 Stunden unter Rühren bei zirka 400 U/min. mit einem üblichen Teflonblattrührer in einer Stickstoffatmosphäre auf 240 °C erhitzt. Das erhaltene Produkt hatte eine Viskosität (20 °C) von 142 mPa·s.

Beispiele 5 und 6

Es wurde nach der Vorschrift des Beispiels 1 verfahren; jedoch wurden anstelle von 3,5 g 5,0 g und 8,0 g der in Beispiel 1 beschriebenen Kieselsäure hergestellt. Die Viskosität bei 20 °C der Verfahrensprodukte lag bei 155 mPa·s für das Produkt von Beispiel 5 und bei 579 mPa·s für das Produkt von Beispiel 6.

Beispiele 7 und 8

Je 100 g 2-Octyldodecanol wurden mit einer mit Organochlorsilanen hydrophobierten Fällungskieselsäure (BET-Oberfläche 110 $m^2/g$, mittlerer Primärteilchendurchmesser 28 mμ, Handelsprodukt Sipernat D 17 der Firma Degussa) versetzt und wie in Beispiel 1 behandelt. Es wurden 3,5 g Fällungskieselsäure (Beispiel 7) bzw. 8,0 g der Fällungskieselsäure (Beispiel 8) eingesetzt.

Viskosität (20 °C) der Verfahrensprodukte:
Beispiel 7: 71 mPa·s;
Beispiel 8: 93 mPa·s.

Beispiel 9

Aus einem technischen Fettalkoholschnitt im Bereich $C_{10}/C_{16}$ wurde ein Gemisch verschiedener Guerbet-Alkohole nach dem in der DE-OS-2 634 676 beschriebenen Verfahren hergestellt. Dieser Guerbet-Alkohol hatte die folgende Zusammensetzung:

$C_{22}H_{45}OH$: 3 Gew.-%;
$C_{24}H_{49}OH$: 44,7 Gew.-%;
$C_{26}H_{53}OH$: 25,3 Gew.-%;
$C_{28}H_{57}OH$: 13,1 Gew.-%;
$C_{30}H_{61}OH$: 2,4 Gew.-%.

100 g dieser Mischung wurden mit 3,5 g der in Beispiel 1 angegebenen Kieselsäure versetzt und wie in Beispiel 1 beschrieben behandelt. Das resultierende Produkt hatte eine Viskosität von 160 mPa·s bei 20 °C.

Es folgen nun zum Vergleich einige nicht erfindungsgemässe Produktbeispiele.

Beispiel 10

In diesem Vergleichsversuch wurde als Schauminhibitor auf Silikonbasis das Produkt «SAG 100» der Firma Union Carbide Corp. eingesetzt. Die damit bei der Einsatzkonzentration 0,1 Gewichtsprozent resultierende Schaumnote hatte den Wert 2–3.

Beispiel 11

100 g 2-Octyldodecanol und 3,5 g einer nicht hydrophobierten pyrogenen Kieselsäure (BET-Oberfläche 200 $m^2/g$, mittlerer Primärteilchendurchmesser 12 mμ, Aerosil 200 der Firma Degussa) wurden wie in Beispiel 1 behandelt. Die Viskosität des Produkts betrug 135 mPa·s bei 20 °C.

Beispiel 12

100 g eines technischen Oleylalkohols, Jodzahl 94, Hydroxylzahl 210, wurden in Analogie zu der Vorschrift des Beispiels 1 verarbeitet. Das entstandene Produkt hatte eine Viskosität von 140 mPa·s bei 20 °C.

Beispiel 13

2-Octyldodecanol wurde ohne Zusatz von Kieselsäure 5 Stunden unter Rühren und in einer Stickstoffatmosphäre auf 240 °C erhitzt. Nach dieser Behandlung hatte das auf 20 °C abgekühlte Produkt eine Viskosität von 54 mPa·s.

Beispiel 14

Zur Bestimmung der schauminhibierenden Wirkung wurden die Produkte der Beispiele 1 bis 13

zusammen mit einem Versuchswaschmittel ohne Schauminhibitor eingesetzt.

Dieses Versuchswaschmittel hatte die folgende Zusammensetzung (in Gew.-%):

7,0 n-Dodecylbenzolsulfonat-Na-Salz,
2,5 Talgalkohol + 14 EO,
40,0 Natriumtriphosphat,
3,5 Wasserglas ($Na_2O:SiO_2$ wie 1:3,35),
24,0 Natriumperborat-tetrahydrat,
2,5 Magnesiumsilikat,
0,2 Ethylendiamintetraacetat-Na-Salz,
1,0 Na-Carboxymethylcellulose,
0,3 optischer Aufheller,
Rest Natriumsulfat und Wasser.

Die Anwendungskonzentration des Entschäumers betrug 0,1 und 0,2%. Mit den Waschmittelformulierungen wurde in einer Trommelwaschmaschine (Miele W 433) ein normaler Kochwaschgang bis 95 °C mit Vor- und Klarwäsche durchgeführt. Die Maschine war mit 3,5 kg sauberer Haushaltwäsche beladen und die Wasserhärte betrug lediglich 3 ° dH, d.h. es wurden Verhältnisse gewählt, die eine starke Schaumentwicklung begünstigen. Die Waschmittelmenge betrug jeweils 100 g für die Vor-und die Klarwäsche.

Zur Bestimmung des Schaumverhaltens wurde die Schaumhöhe durch das Sichtglas der Fronttüre der Waschmaschine kontrolliert und nach der folgenden Skala benotet:

| | |
|---|---|
| kein Schaum = | 0 |
| 1/4 der Sichtglashöhe = | 1 |
| 1/2 der Sichtglashöhe = | 2 |
| 3/4 der Sichtglashöhe = | 3 |
| 4/4 der Sichtglashöhe = | 4 |
| Schaum im Einfüllstutzen = | 5 |

Bei Überschäumen der Waschmaschine wurde der Flottenverlust gewogen.

Die folgende Tabelle gibt das Schaumverhalten des Waschmittels mit der angegebenen Einsatzkonzentration an erfindungsgemässem Entschäumer bzw. Vergleichsprodukt für die Waschtemperatur von 95 °C wieder, bzw. es wird der Flottenverlust angegeben.

| Beispiel | Entschäumer-konz. (Gew.-%) | Schaumnote/ Flottenverlust (g) |
|---|---|---|
| 1 | 0,1 | 1–2 |
| 2 | 0,1 | 3 |
| 3 | 0,1 | 240 g |
| 4 | 0,1 | 3 |
| 5 | 0,2 | 1–2 |
| 6 | 0,2 | 1–2 |
| 7 | 0,2 | 1–2 |
| 8 | 0,2 | 1–2 |
| 9 | 0,2 | 2 |
| 10 | 0,1 | 2–3 |
| 11 | 0,2 | 80 g |
| 12 | 0,2 | 340 g |
| 13 | 3,5 | 320 g |
| 14 | ohne Zusatz | > 500 g |

Interpretation der Ergebnisse:

Das Ergebnis mit dem Produkt nach Beispiel 3 zeigt deutlich, dass ein blosses Mischen des Alkohols und der Kieselsäure ohne anschliessende Temperaturbehandlung zu einem unbrauchbaren Produkt führt. Das Produkt mit dem unverzweigten langkettigen Alkohol nach Beispiel 12 ist als Schauminhibitor ebenfalls ungeeignet. Der Versuch mit dem Produkt des Beispiels 13 zeigt, dass der Guerbet-Alkohol 2-Octyldodecanol ohne die erfindungsgemässe Einarbeitung der hydrophoben Kieselsäure keine Antischaumwirkung zeigt.

Die Vergleichsversuche zeigen ferner, dass mit 0,1 oder 0,2 Gewichtsprozent des erfindungsgemäss hergestellten Entschäumers hervorragende Schaumnoten erhalten werden.

Beim Lagern von pulverförmigen Waschmitteln, die einen Gehalt von 0,1 bis 0,2 Gewichtsprozent des erfindungsgemäss hergestellten Schauminhibitors aufwiesen, wurde auch nach einer längeren Lagerzeit kein Verlust der schaumdämpfenden Wirkung beobachtet. Auch bei einer wiederholten Anwendung der erfindungsgemässen Entschäumer beim Waschen von Textilien trat keine Vergrauung der Gewebe ein. Ebenfalls wurden keine auf den Entschäumer zurückzuführenden Ablagerungen auf Waschmaschinenteilen, die bei der Verwendung von Silikonentschäumern auftreten können, beobachtet.

**Patentansprüche**

1. Verfahren zur Herstellung eines Entschäumers für wässrige Systeme, dadurch gekennzeichnet, dass man einen 18 bis 30 Kohlenstoffatome enthaltenden, kettenverzweigten, primären Alkohol mit hydrophobierter, kolloidaler Kieselsäure im Verhältnis Alkohol:Kieselsäure wie 100:2 bis 100:20, vorzugsweise 100:3 bis 100:10, vermischt und unter Rühren auf Temperaturen zwischen 100 und 240 °C erhitzt.

2. Verfahren nach Anspruch 1, dadurch gekennzeichnet, dass man in einer Inertgasatmosphäre für die Dauer von 1 bis 5 Stunden erhitzt.

3. Verfahren nach Anspruch 1 und 2, dadurch gekennzeichnet, dass man als kettenverzweigten primären Alkohol einen Guerbet-Alkohol der Formel

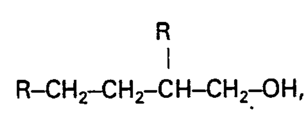

in der die beiden Gruppen R gleich oder verschieden sein können und Alkylreste mit 4 bis 16

Kohlenstoffatomen bedeuten, wobei der Alkohol insgesamt 18 bis 30 Kohlenstoffatome aufweist, verwendet.

4. Verfahren nach Anspruch 3, gekennzeichnet durch die Verwendung eines bei Raumtemperatur flüssigen Guerbetalkohols.

5. Verfahren nach Anspruch 1 bis 4, dadurch gekennzeichnet, dass man einen Guerbet-Alkohol, der im wesentlichen aus 2-Octyldodecanol besteht, verwendet.

6. Verfahren nach Anspruch 1 bis 5, dadurch gekennzeichnet, dass man das Gemisch aus dem Alkohol und der Kieselsäure vor dem Erhitzen homogenisiert.

7. Verwendung der Verfahrensprodukte nach Anspruch 1 bis 6 als Schauminhibitoren für wässrige Systeme.

8. Verwendung als Schauminhibitoren nach Anspruch 7 in Wasch- und Reinigungsmitteln in Mengen von 0,01 bis 1 Gewichtsprozent, vorzugsweise 0,05 bis 0,2 Gewichtsprozent.

**Revendications**

1. Procédé de préparation d'un agent antimousse pour systèmes aqueux, caractérisé en ce qu'on mélange un alcool primaire à chaîne ramifiée contenant 18 à 30 atomes de carbone avec de l'acide silicique colloïdal rendu hydrophobe dans le rapport alcool/acide silicique de 100:2 à 100:20, de préférence, de 100:3 à 100:10 puis, tout en agitant, on chauffe à des températures comprises entre 100 et 240 °C.

2. Procédé suivant la revendication 1, caractérisé en ce qu'on chauffe sous une atmosphère d'un gaz inerte pendant une période de 1 à 5 heures.

3. Procédé suivant les revendications 1 et 2, caractérisé en ce que, comme alcool primaire à chaîne ramifiée, on utilise un alcool de Guerbet répondant à la formule:

R
|
$R{-}CH_2{-}CH_2{-}CH{-}CH_2{-}OH$

dans laquelle les deux groupes R peuvent être identiques ou différents et représentent chacun un groupe alkyle contenant 4 à 16 atomes de carbone, cet alcool contenant, au total, 18 à 30 atomes de carbone.

4. Procédé suivant la revendication 3, caractérisé en ce qu'on utilise un alcool de Guerbet liquide à la température ambiante.

5. Procédé suivant les revendications 1 à 4, caractérisé en ce qu'on utilise un alcool de Guerbet constitué essentiellement de 2-octyldodécanol.

6. Procédé suivant les revendications 1 à 5, caractérisé en ce qu'on homogénéise le mélange de l'alcool et de l'acide silicique avant le chauffage.

7. Utilisation des produits du procédé suivant les revendications 1 à 6 comme inhibiteurs de mousse pour systèmes aqueux.

8. Utilisation comme inhibiteurs de mousse suivant la revendication 7 dans des agents de lavage et de nettoyage en quantités de 0,01 à 1% en poids, de préférence, de 0,05 à 0,2% en poids.

**Claims**

1. A process for the production of a defoaming agent for aqueous systems, characterised in that a branched-chain primary alcohol containing from 18 to 30 C-atoms is mixed with hydrophobised colloidal silica in a ratio of alcohol to silica of from 100:2 to 100:20 and preferably from 100:3 to 100:10 and the resulting mixture heated with stirring to temperatures in the range from 100 to 240 °C.

2. A process as claimed in Claim 1, characterised in that heating is carried out in an inert gas atmosphere for a period of from 1 to 5 hours.

3. A process as claimed in Claims 1 and 2, characterised in that a Guerbet alcohol corresponding to the following formula

R
|
$R{-}CH_2{-}CH_2{-}CH{-}CH_2{-}OH$,

in which the two groups R may be the same or different and represent $C_4$–$C_{16}$-alkyl radicals, the alcohol containing a total of 18 to 30 carbon atoms, is used as the branched-chain primary alcohol.

4. A process as claimed in Claim 3, characterised by the use of a Guerbet alcohol which is liquid at room temperature.

5. A process as claimed in Claims 1 to 4, characterised in that a Guerbet alcohol consisting essentially of 2-octyl dodecanol is used.

6. A process as claimed in Claims 1 to 5, characterised in that the mixture of the alcohol and the silica is homogenised before heating.

7. The use of the products obtained by the process claimed in Claims 1 to 6 as foam inhibitors for aqueous systems.

8. The use as foam inhibitors claimed in Claim 7 in washing and cleaning agents in quantities of from 0,01 to 1% by weight and preferably in quantities of from 0.05 to 0,2% by weight.